# EUROPÄISCHE PATENTANMELDUNG

(11) **EP 1 083 449 A1**
(43) Veröffentlichungstag der Anmeldung: **14.03.2001**
(21) Anmeldenummer: 99810811.2
(22) Anmeldetag: 09.09.1999
(51) Int. Cl.: G02B 6/38

(54) **Buchsenteil für eine optische Steckverbindung**

(71) Anmelder: Diamond SA, 6616 Losone (CH)
(72) Erfinder: De Marchi, Silverio, 6612 Ascona (IT); Marazzi, Silvio, 6600 Locarno (IT)
(74) Vertreter: Wenger, René

(57) **Zusammenfassung**

Im Buchsenteil (1) ist die Zentrierhülse (2) wenigstens tellweise mit einer Adapterhülse (5) ausgestattet. Zu diesem Zweck ist ein Wälzkörperkäfig (5) in die Zentrierhülse eingeführt, der mit Kugeln (12) bestückt ist. Ein eingesteckter Steckerstift (3) ist dabei an den Kugeln und nicht direkt am Innenmantel der Zentrierhülse (2) zentriert. Mit dieser Anordnung kann eine Hybridsteckverbindung für faseroptische Steckerstifte (3,4) mit unterschiedlichen Durchmessern (d1,d2) hergestellt werden.

## Beschreibung

Die Erfindung betrifft ein Buchsenteil für eine optische Steckverbindung gemäss dem Oberbegriff von Anspruch 1. Derartige Buchsenteile bilden in der Regel entweder die Schnittstelle zwischen zwei optischen Steckern oder zwischen einem optischen Stecker und einem optischen Modul wie z.B. eine Leuchtdiode oder dergleichen.

In jedem Fall dient der Aussenmantel des Steckerstifts als Referenzfläche für eine möglichst genaue Positionierung bzw. Zentrierung des Steckerstifts und damit des im Stekkerstift zentrisch gehaltenen Lichtwellenleiters. Dies erfordert einerseits eine möglichst spielfreie Führung des Steckerstifts in der Zentrierhülse. In bestimmten Fällen wäre es wünschenswert, wenn in der gleichen Zentrierhülse Steckerstifte mit unterschiedlichem Durchmesser eingesteckt bzw. auf einander zentriert werden könnten.

Es ist deshalb eine Aufgabe der Erfindung, das Einsatzspektrum einer Zentrierhülse derart zu erweitern, dass die gleiche Zentrierhülse für Steckerstifte mit unterschiedlichem Durchmesser einsetzbar ist. Diese Aufgabe wird erfindungsgemäss mit einem Buchsenteil gelöst, das die Merkmale im Anspruch 1 aufweist. Die Verwendung der Adapterhülse mit ihren Distanzelementen ermöglicht es, die Zentrizität des Innenmantels der Zentrierhülse auf einen Steckerstift mit kleinerem Aussendurchmesser zu übertragen, der seinerseits an den Distanzelementen zentrierbar ist. Besonders vorteilhafte Ergebnisse können dabei erzielt werden, wenn die Adapterhülse als Wälzkörperkäfig ausgebildet ist und wenn die Distanzelemente Wälzkörper, insbesondere Kugeln sind, die über den Umfang verteilt im Wälzkörperkäfig gehalten sind. Derartige Wälzkörper lassen sich hochpräzise bearbeiten und sie berühren die Oberfläche des Steckerstifts nur punktförmig bzw. linienförmig. Es könnte sich bei den Wälzkörpern auch um Nadeln handeln, deren Achsen parallel zur Längsmittelachse der Zentrierhülse verlaufen.

Ein besonders vorteilhafter Einsatz der Adapterhülse kann dadurch erreicht werden, dass die Zentrierhülse zur Erhöhung der Umfangselastizität in Längsrichtung einen vorzugsweise durchgehenden Schlitz aufweist. Geschlitzte Zentrierhülsen an optischen Steckverbindungen sind seit langem bekannt und gebräuchlich. Die Zentrierhülse umschliesst dabei einen eingesteckten Steckerstift federnd und spielfrei. Bei der erfindungsgemässen Ausstattung der Zentrierhülse mit einer Adapterhülse wird diese Umfangselastizität nicht direkt, sondern über die Distanzelemente auf den Steckerstift übertragen.

Vorzugsweise weist der Wälzkörperkäfig ein Positionierelement auf, das zur radialen Positionierung in den Schlitz der Zentrierhülse eingreift. Auf diese Weise wird verhindert, dass sich der Wälzkörperkäfig in der Zentrierhülse verdrehen kann. Mit dieser Massnahme kann aber auch zuverlässig ausgeschlossen werden, dass Wälzkörper in den geschlitzten Bereich der Zentrierhülse gelangen können.

Um ein Verkanten der Steckerstifte zu verhindern, ist die Zentrierhülse mit radialem und axialem Spiel in einem Hülsenlager gehalten. Das Positionierelement kann dabei zur axialen Positionierung in eine Aussparung im Hülsenlager eingreifen. Damit wird einerseits verhindert, dass sich der Wälzkörperkäfig entlang des Schlitzes in axialer Richtung verschieben kann. Gleichzeitig wird aber auch die radiale Relativlage der ganzen Zentrierhülse im Hülsenlager festgelegt, was die Reproduzierbarkeit der Übertragungsqualität verbessert.

Je nach Einsatzzweck des Buchsenteils kann der Wälzkörperkäfig bezüglich Anzahl und Anordnung der Wälzkörper unterschiedlich ausgebildet sein. Besonders vorteilhaft trägt der Wälzkörperkäfig aber auf mehreren im Abstand zueinander angeordneten und im rechten Winkel zur Längsmittelachse verlaufenden Ebenen je drei Kugeln in gleicher Winkelteilung bezogen auf den Umfang. Mit einer derartigen Dreiergruppe lässt sich die Lage eines zylindrischen Stifts exakt definieren. Vorteilhaft sind dabei die Kugeln auf benachbarten Ebenen radial versetzt zueinander angeordnet. Dies erlaubt einerseits kürzere Abstände zwischen den einzelnen Ebenen und bewirkt andererseits eine gleichmässige Gesamtverteilung sämtlicher Kugeln eines Wälzkörperkäfigs.

Die Wälzkörper müssen auch ohne eingesteckten Steckerstift unverlierbar im Wälzkörperkäfig gehalten sein. Dies wird auf einfache Weise dadurch erreicht, dass sich die Käfigöffnungen gegen den Innenmantel des Wälzkörperkäfigs verjüngen. Eine Fixierung der Wälzkörper gegen den Aussenmantel hin ist dagegen nicht erforderlich, weil der Wälzkörperkäfig fest in der Zentrierhülse gehalten ist. Im Hinblick auf das Erfordernis höchster Präzision ist es vorteilhaft, die Wälzkörper aus einem mineralischen Werkstoff, insbesondere aus Rubin oder Saphir herzustellen. Diese Materialien sind abriebfest, weisen eine hohe Härte auf und lassen sich präzise bearbeiten. Denkbar sind aber auch andere Werkstoffe wie z.B. Hartmetall oder dergleichen. Auch die Zentrierhülse selbst besteht vorteilhaft aus einem keramischen Werkstoff, wie z.B. Zirkon.

Der erfindungsgemässe Einsatz der Adapterhülse eröffnet die Möglichkeit, die gleiche Zentrierhülse für Steckerstifte unterschiedlicher Durchmesser zu verwenden. So wäre es beispielsweise denkbar, dass in eine standardisierte Zentrierhülse Adapterhülsen für verschiedene kleinere Innendurchmesser eingesetzt werden können. Besonders vorteilhaft lässt sich diese Funktion an einem Buchsenteil realisieren, das zur koaxialen Aufnahme je eines Steckerstifts auf beiden Seiten der Zentrierhülse bestimmt ist. Dies ist bei sogenannten Durchführungskupplungen der Fall, bei denen das Buchsenteil beispielsweise an einer Gerätewand befestigt ist und bei dem von beiden Seiten her ein Stecker eingesteckt werden kann.

Erfindungsgemäss erhält das Buchsenteil dabei auf besonders einfache Weise eine Hybridfunktion, wenn die Adapterhülse sich von einer Öffnungsseite her über einen Teil der Länge der Zentrierhülse erstreckt, wobei Steckerstifte unterschiedlicher Durchmesser aufeinander zentrierbar sind. Der Steckerstift mit kleinerem Durchmesser wird dabei in die Adapterhülse eingesteckt und der Steckerstift mit grösserem Durchmesser direkt in denjenigen Abschnitt der Zentrierhülse, der nicht von der Adapterhülse ausgefüllt ist. In der Regel wird dabei die Adapterhülse maximal die Hälfte der gesamten Länge der Zentrierhülse ausfüllen.

Mit Hilfe der Adapterhülle lässt sich der steckbare Stiftdurchmesser vorteilhaft um die Hälfte reduzieren. So sind beispielsweise genormte optische Stecker mit einem Stiftdurchmesser von 2,5 mm auf dem Markt. Die zunehmende Miniaturisierung der Bauteile und die damit zusammenhängende grössere Packungsdichte der Stecker hat jedoch bereits zu kleineren Steckern mit Stiftdurchmessern von 1,25 mm geführt. Mit Hilfe der erfindungsgemässen Adapterhülse ist eine Kern-Kern-Zentrierung der Lichtwellenleiter dieser zwei unterschiedlichen Durchmesser problemlos möglich.

Ausführungsbeispiele der Erfindung sind in den Zeichnungen dargestellt und werden nachstehend genauer beschrieben. Es zeigen:
- Figur 1: einen stark vergrösserten Teilquerschnitt durch ein erfindungsgemässes Buchsenteil,
- Figur 2: eine aus Hülsenlager, Zentrierhülse und Walzkörperkäfig bestehende Bauteilgruppe in perspektivischer Darstellung,
- Figur 3: einen Schnitt durch die Bauteilgruppe gemäss Figur 2 in zusammengebautem Zustand,
- Figur 4: eine Seitenansicht eines Wälzkörperkäfigs,
- Figur 5: ein Querschnitt durch die Ebene I-I am Käfig gemäss Figur 4,
- Figur 6: ein Querschnitt durch die Ebene II-II am Käfig gemäss Figur 4, und
- Figur 7: das Detail X einer Käfigöffnung gemäss Figur 6.

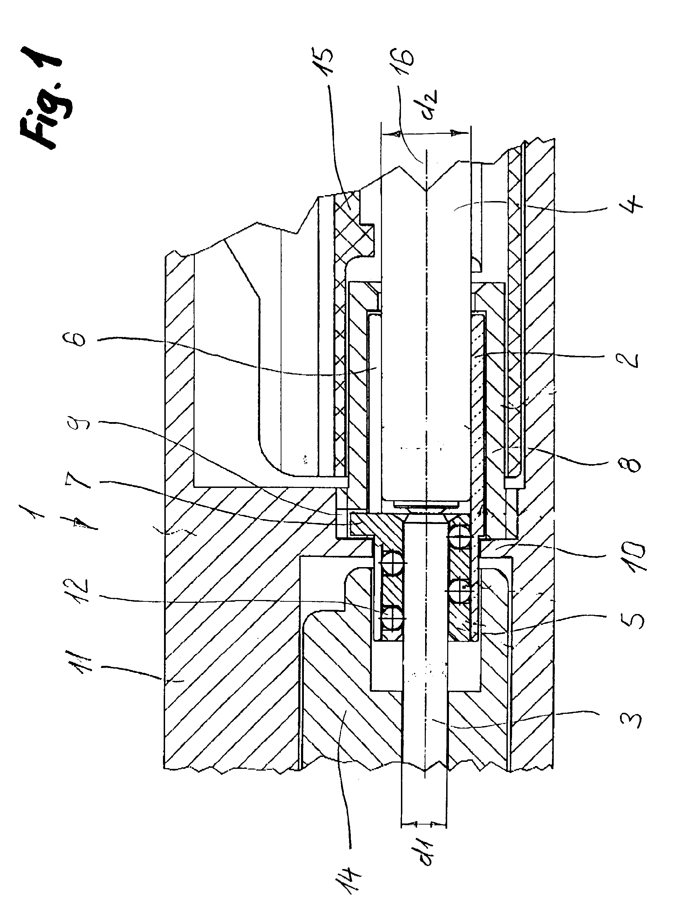

In Figur 1 ist ein Buchsenteil 1 dargestellt, das ein Buchsengehäuse 11 beispielsweise aus Kunststoff aufweist. Je nach Steckertyp kann dieses Buchsengehäuse einen rechteckigen oder einen runden Querschnitt aufweisen. In das Buchsenteil kann von beiden Seiten her ein optischer Stecker 14 bzw. 15 eingesteckt werden. Auch diese Stecker können je nach Bautyp unterschiedliche Konfigurationen aufweisen. Jeder Stecker ist mit einem Steckerstift 3 bzw. 4 versehen, in welchem der eigentliche Lichtwellenleiter auf bekannte Weise in einer Bohrung zentrisch gefasst ist. Die Steckerstifte sind am Aussenmantel hochpräzise bearbeitet und bestehen aus einem harten Werkstoff wie z.B. Keramik. Beim Ausführungsbeispiel hat der Steckerstift 3 einen Durchmesser d1 von 1,25 mm und der Steckerstift 4 einen Durchmesser d2 von 2,5 mm.

Die für eine möglichst dämpfungsfreie Lichtübertragung erforderliche Zusammenführung der Lichtwellenleiter bzw. die Zentrierung der Steckerstifte 3 und 4 erfolgt in einer Zentrierhülse 2 beispielsweise aus Zirkon. Wie insbesondere aus Figur 2 ersichtlich ist, weist die Zentrierhülse einen parallel zur Längsmittelachse 16 verlaufenden und durchgehenden Schlitz 6 auf. Der Schlitz bewirkt auf an sich bekannte Weise eine hohe Umfangselastizität zur spielfreien Aufnahme eines Steckerstifts. Zur Anpassung an die Innenmasse des optischen Steckers 14 ist die Zentrierhülse 2 ausserdem mit einem Abschnitt 18 von geringerer Wandstärke versehen. Dieser Abschnitt wäre nicht zwingend erforderlich, er bewirkt jedoch noch eine Verbesserung der Umfangselastizität.

Die Zentrierhülse 2 ist in einem Hülsenlager 8 mit radialem und axialem Spiel schwimmend gelagert. Zu diesem Zweck ist das Hülsenlager 8 mit einer Flanschpartie 20 versehen, an der es im Buchsengehäuse 11 durch Einschrauben oder Kleben fixiert werden kann. Im Bereich dieser Befestigung bildet das Buchsengehäuse einen umlaufenden Kragen 10, durch den die Zentrierhülse teilweise dringt und der als Anschlag für die Flanschpartie 20 dient. Auf der gegenüberliegenden Seite des Hülsenlagers sorgt ein umlaufender Anschlag 19 dafür, dass die Zentrierhülse festgehalten wird.

Ein Teil der Zentrierhülse ist mit einer Adapterhülse ausgebildet. Zu diesem Zweck ist ein Wälzkörperkäfig 5 in die Zentrierhülse eingeführt und zwar derart, dass eine Stirnseite des Käfigs bündig verläuft mit einer Stirnseite der Zentrierhülse. Der hohlzylindrische Wälzkörperkäfig 5 ist mit einem kammartigen Positionierelement versehen, das in den Schlitz 6 der Zentrierhülse eingreift bzw. aus diesem Schlitz herausragt. Der Wälzkörperkäfig kann beispielsweise aus Kunststoffmaterial gefertigt sein. Der aus dem Schlitz herausragende Teil des Positionierelements greift in eine Aussparung 9 am Hülsenlager 8. Ersichtlicherweise ist damit der Wälzkörperkäfig bezüglich seiner radialen und axialen Lage positioniert.

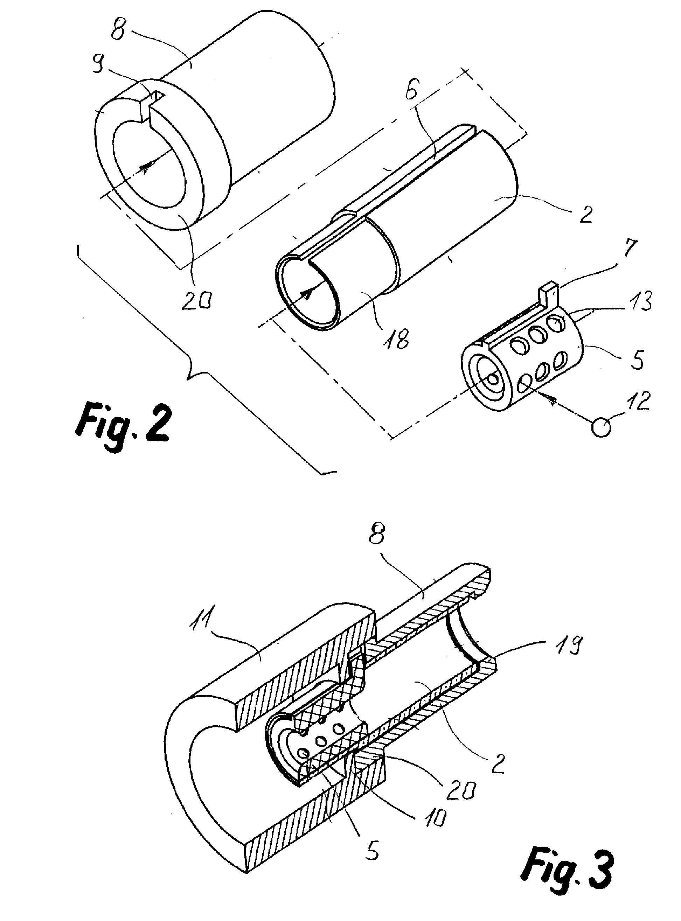

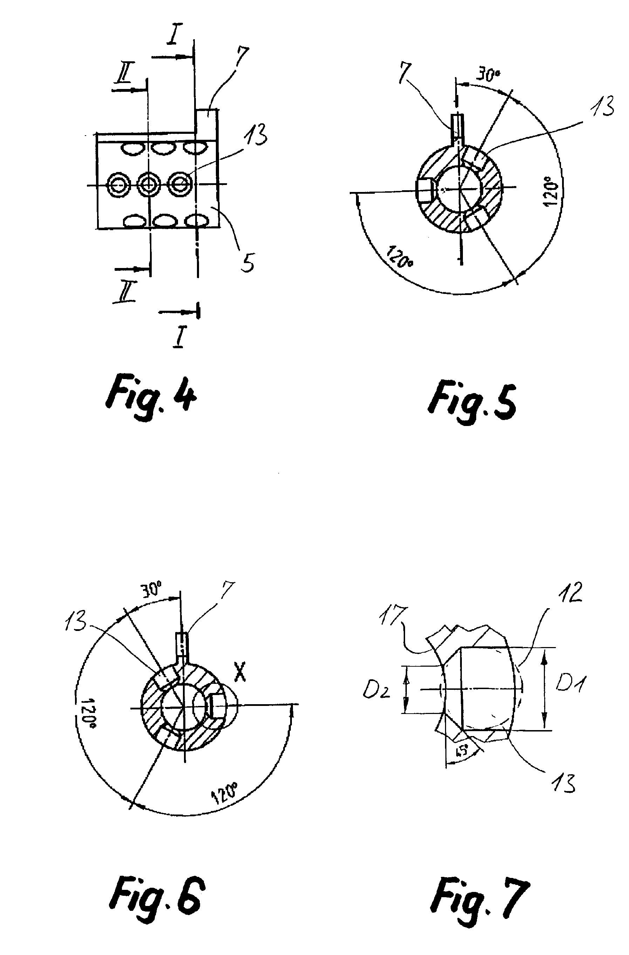

Der Wälzkörperkäfig weist verschiedene hintereinander angeordnete Ebenen mit Kugeln 12 auf, die in Käfigöffnungen 13 gehalten sind. Beim Ausführungsbeispiel gemäss Figur 1 sind es insgesamt 4 Ebenen mit je einer Dreiergruppe Kugeln, während der Wälzkörperkäfig gemäss den Figur 2 und 3 über insgesamt 6 derartige Ebenen verfügt. Konstruktive Einzelheiten eines Wälzkörperkäfigs sind aus den Figur 4 bis 7 ersichtlich. Auf einer Ebene, beispielsweise I-I oder II-II sind die Käfigöffnungen 13 bzw. die Kugeln 12 in gleichmässiger Winkelteilung von 120° angeordnet. Die dem Positionierelement 7 und damit dem Schlitz 6 an der Zentrierhülse am nächsten liegende Käfigöffnung ist um 30° zum Positionierelement versetzt. Damit ist sichergestellt, dass die Kugeln nicht im Bereich des Schlitzes liegen. Auf benachbarten Kugelebenen sind die Käfigöffnungen 13 jeweils um 60° zueinander versetzt, sodass sich insgesamt eine gleichmässige Verteilung der Kugeln 12 ergibt.

Die Kugeln 12 müssen bei ausgestecktem Steckerstift unverlierbar im Wälzkörperkäfig 5 gehalten sein. Zu diesem Zweck verjüngt sich die Kugelöffnung 13 mit dem Durchmesser D1 gegen den Innenmantel 17 Käfigs hin zu einem kleineren Durchmesser D2. Selbstverständlich sind die einzelnen Bauteile derart dimensioniert und toleriert, dass der Wälzkörperkäfig klemmfrei in der Zentrierhülse gehalten ist, wobei die Kugeln exakt den Ringspalt zwischen dem Innenmantel der Zentrierhülse und dem Aussenmantel des Steckerstifts 3 ausfüllen. Beim Ausführungsbeispiel haben die Kugeln aus Rubin einen Kugeldurchmesser von 0,625 mm.

## Patentansprüche

1. Buchsenteil (1) für eine optische Steckverbindung mit wenigstens einer Zentrierhülse (2) zur zentrierten Aufnahme wenigstens eines Steckerstifts (3), dadurch gekennzeichnet, dass in der Zentrierhülse (2) wenigstens eine Adapterhülse angeordnet ist, welche an der Innenwand der Zentrierhülse abgestützte Distanzelemente aufweist, wobei ein eingesteckter Steckerstift (3) an den Distanzelementen zentrierbar ist.

2. Buchsenteil nach Anspruch 1, dadurch gekennzeichnet, dass die Adapterhülse als Wälzkörperkäfig (5) ausgebildet ist, und dass die Distanzelemente Wälzkörper (12), insbesondere Kugeln sind, die über den Umfang verteilt im Wälzkörperkäfig gehalten sind.

3. Buchsenteil nach Anspruch 2, dadurch gekennzeichnet, dass die Zentrierhülse zur Erhöhung der Umfangselastizität in Längsrichtung einen vorzugsweise durchgehenden Schlitz (6) aufweist.

4. Buchsenteil nach Anspruch 3, dadurch gekennzeichnet, dass der Wälzkörperkäfig (5) ein Positionierelement (7) aufweist, das zur radialen Positionierung in den Schlitz (6) der Zentrierhülse (2) eingreift.

5. Buchsenteil nach einem der Ansprüche 2 bis 4, dadurch gekennzeichnet, dass die Zentrierhülse (2) mit radialem und axialem Spiel in einem Hülsenlager (8) gehalten ist.

6. Buchsenteil nach Anspruch 4 und Anspruch 5, dadurch gekennzeichnet, dass das Positionierelement (7) zur axialen Positionierung in eine Aussparung (9) im Hülsenlager (8) eingreift.

7. Buchsenteil nach einem der Ansprüche 2 bis 6, dadurch gekennzeichnet, dass der Wälzkörperkäfig (5) auf mehreren, im Abstand zueinander angeordneten und im rechten Winkel zur Längsmittelachse (16) verlaufenden Ebenen je drei Kugeln (12) in gleicher Winkelteilung bezogen auf den Umfang trägt, wobei die Kugeln auf benachberten Ebenen radial versetzt zueinander angeordnet sind.

8. Buchsenteil nach einem der Ansprüche 2 bis 7, dadurch gekennzeichnet, dass sich die Käfigöffnungen (13) gegen den Innenmantel (17) des Wälzkörperkäfigs (5) derart verjüngen, dass die Wälzkörper (12) unverlierbar gehalten sind.

9. Buchsenteil nach einem der Ansprüche 2 bis 8, dadurch gekennzeichnet, dass die Walzkörper (12) aus einem mineralischen Werkstoff, insbesondere aus Rubin oder Saphir bestehen.

10. Buchsenteil nach einem der Ansprüche 1 bis 9 zur koaxialen Aufnahme je eines Steckerstifts auf beiden Seiten der Zentrierhülse, dadurch gekennzeichnet, dass die Adapterhülse (5) sich von einer Öffnungsseite her über einen Teil der Länge der Zentrierhülse (2) erstreckt, wobei Steckerstifte (3, 4) unterschiedlicher Durchmesser (d1, d2) aufeinander zentrierbar sind.

11. Steckverbindung für optische Stecker mit einem Buchsenteil (1) nach einem der Ansprüche 1 bis 10 zwischen zwei Steckern (14, 15) mit unterschiedlichen Durchmessern (d1, d2) der Steckerstifte (3, 4), wobei der Steckerstift (3) mit dem kleineren Durchmesser (d1) in die Adapterhülse (5) und der Steckerstift (4) mit dem grösseren Durchmesser (d2) direkt in die Zentrierhülse (2) eingesteckt ist.
